(19) Europäisches Patentamt

European Patent Office

Office européen des brevets

(11) EP 1 389 532 A2

(12) **EUROPEAN PATENT APPLICATION**

(43) Date of publication:
18.02.2004 Bulletin 2004/08

(51) Int Cl.⁷: **B41J 2/45**, G06K 15/12

(21) Application number: 03253749.0

(22) Date of filing: 13.06.2003

(84) Designated Contracting States:
**AT BE BG CH CY CZ DE DK EE ES FI FR GB GR HU IE IT LI LU MC NL PT RO SE SI SK TR**
Designated Extension States:
**AL LT LV MK**

(30) Priority: **20.06.2002 JP 2002180330**

(71) Applicant: **KONICA CORPORATION Tokyo 163-0512 (JP)**

(72) Inventor: **Yusuke, Kimura Hachioji-shi Tokyo 192-8505 (JP)**

(74) Representative: **Rees, Alexander Ellison et al Urquhart-Dykes & Lord, 30 Welbeck Street London W1G 8ER (GB)**

(54) **Image exposure apparatus**

(57) An image exposure apparatus performing a stable image exposure. The image exposure apparatus includes: a light source section (30) including a light source having a plurality of channels which have a plurality of LEDs, a light source drive circuit (32) for driving the LEDs, and a scanning section for scanning the light source section (30) when performing image exposure, wherein the light source drive circuit (32) is installed in the light source section (30).

# FIG.1

## Description

BACKGROUND OF THE INVENTION

Field of the Invention

The present invention relates to an image exposure apparatus for forming an image by irradiating a light beam.

Description of Related Art

An image exposure apparatus for forming an image by carrying out image exposure on a recording medium, e.g., a light-sensitive material or the like, by irradiating a light beam which is emitted from a light source, onto the exposure surface thereof, is known. Such an image exposure apparatus includes, for example, an apparatus for outputting a color proof for calibration on the basis of image data for printing, before carrying out an actual printing by a printing apparatus.

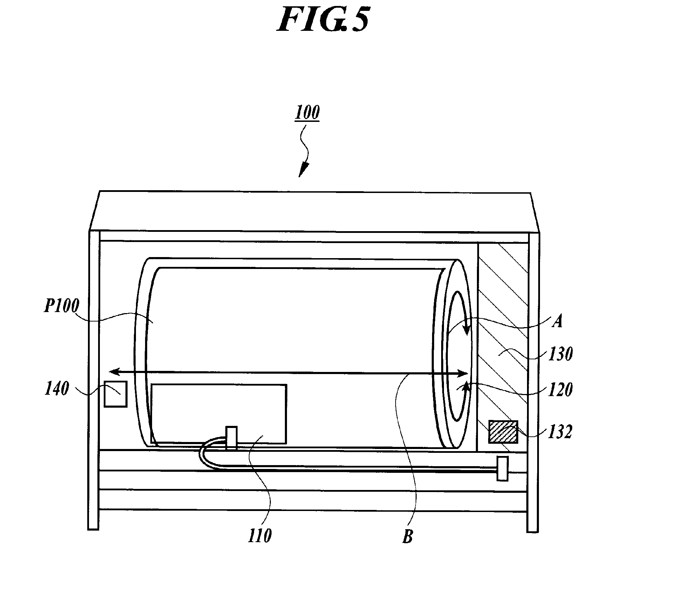

In FIG. 5, an earlier development of image exposure apparatus 100 is shown schematically. The exposure apparatus 100 comprises a light source section 110 which includes a light source having light emitting elements, e.g., LEDs (light-emitting diodes), LDs (laser diodes) or the like, a mirror, a lens and the like. In the exposure apparatus 100, an image is formed by irradiating a light beam which is generated from the light source, onto the recording medium P100 which is wound around a drum 120 rotating in a main scanning direction shown by an arrow "A", to carry out exposure repeatedly, with moving the light source section 110 in a sub-scanning direction shown by an arrow "B" which is parallel to the rotary axis of the drum 120.

In an electrical equipment box 130, a power source, a driver section for driving various functional sections of the image exposure apparatus 100, a control unit for controlling the function of each functional section of the image exposure apparatus 100 and the like are stored. In particular, a light source drive circuit 132 for driving the light source is built in the electrical equipment box 130. The light source drive circuit 132 is connected to the light source section 110 through a cable. As described above, such an apparatus realizes downsizing and lightening of the light source section 110 which is driven and controlled in the sub-scanning direction "B", by separating the light source drive circuit 132 from the light source section 110.

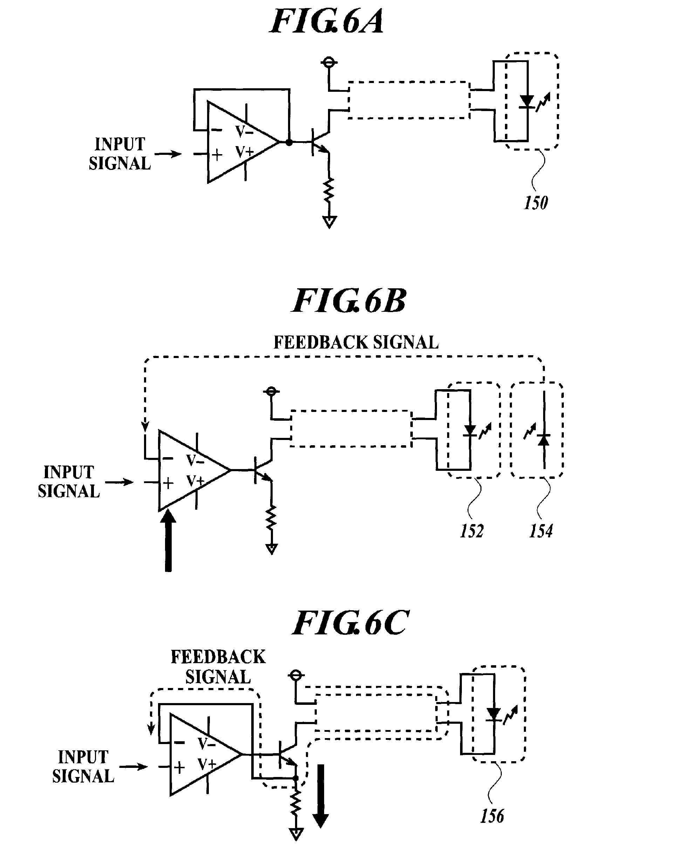

A drive control system of the light source by the light source drive circuit 132 will be explained with reference to FIGS. 6A-6C, as follows. FIGS. 6A, 6B and 6C show an automatic voltage control system, an automatic power control system (hereinafter, which may be called as "APC system"), and an automatic current control system (hereinafter, which may be called as "ACC system"), respectively.

The automatic voltage control system shown in FIG. 6A is a control system which keeps the light amount of light beam generated from a light source 150 constant by controlling the voltage value to be constant. Each of the APC system shown in FIG. 6B and the ACC system shown in FIG. 6C comprises a feedback (hereinafter, which may be called as "FB") control circuit. Generally, an LD light source is driven and controlled by an APC system and an LED light source is driven and controlled by an ACC system. Concretely, the APC system shown in FIG. 6B is one which corrects an error by comparing the light amount of laser beam received by a light receiving section 154, e.g., a photo sensor or the like, which is arranged at a position at which the laser beam emitted from the light source 152 can be received, with a reference light amount. The ACC system shown in FIG. 6C is one which corrects an error by comparing the current value caused when LED 156 emits, with a reference current value.

A light amount measurement mechanism 140 is a functional section for measuring the light amount of light beam from the light source. The control system (exposure control section) of the image exposure apparatus 100 performs FB control of the light amount of light beam from the light source on the basis of the light amount measured prior to exposure by light amount measurement mechanism 140, in order to perform exposure with the optimum light amount when forming an image.

Recently, there is an image exposure apparatus which uses cheap LEDs as a light source and which is provided with a plurality of channels in a sub-scanning direction "B" at predetermined positions in the light source section 110, to increase the imaging speed. For example, in a case that a channel corresponds to a pixel, only one scanning enables exposure for a number of pixels which corresponds to the number of the channels. Although increase in the rotation speed of the drum brings about further increase in the imaging speed, the problem of securing only insufficient emitting time is encountered. The problem of insufficient emitting time brings on a deficiency of light amount because of the light source of LEDs. In order to avoid the problem, a method which uses a channel comprising a plurality of LEDs and ensures a desired light amount by performing multiple exposures, is proposed.

The above-described image exposure apparatus using LEDs as a light source has problems as follows.

First, such an apparatus requires a large size thereof and a large exposure size, and thereby also requires a long wiring to connect the LEDs to the light source drive circuit 132. As a result, the problems of response delay of LEDs to the light source drive signals output from the light source drive circuit 132 and of rounding of response waveform and the like occur, to cause deterioration of an image quality according to the output image data. Further, there is a problem of being easily adversely affected by disturbance, mutual interference or the like because the number of wirings increases according to an increase of the number of LEDs.

Second, in a case that the light source drive circuit 132 drives LEDs by the above-described ACC system, FB signal comes to have the larger delay as the length of wiring for connecting the LEDs to the light source drive circuit 132 becomes the longer. Accordingly, the control delay is enlarged to make the state of the light source drive circuit 132 unstable. As a result, the current value for driving the LEDs is not astringent to a constant value and comes to oscillate. Thereby, it is not possible to perform outputting a stable light amount often. Further, there is a large possibility of destruction of LEDs or the light source drive circuit 132. In a case that the light source drive circuit 132 drives LEDs by the above-described ACC system, generally, a light source drive circuit to drive and control each of LEDs is required. Therefore, there is also a problem that a large circuit scale for the light source drive circuit 132 is required.

Third, in a case that the light source is composed of a plurality of LEDs, the light amount measurement mechanism 140 is required to measure the light amount generated by each of LEDs, individually. Accordingly, the necessary time for measuring the light amount increases together with increase of the number of LEDs, to decrease the productivity. Further, it is necessary to secure a memory capacity to store the measured light amount values for the number of the LEDs. There is also a problem that the time necessary to process the data of the measured light amount values for LEDs increases together with increase of the number of LEDs.

## SUMMARY OF THE INVENTION

The invention has been made in view of the above problems. An object of the invention is to perform a stable image exposure.

In accordance with a first aspect of the present invention, the image exposure apparatus comprises: a light source section including a light source having a plurality of channels which comprise a plurality of LEDs, a light source drive circuit for driving the LEDs, and a scanning section for scanning the light source section when performing image exposure, wherein the light source drive circuit is installed in the light source section.

According to the apparatus of the first aspect of the invention, because the light source drive circuit is installed in the light source section, it is possible to reduce the length of wiring for connecting the LEDs to the light source drive circuit. As a result, the response delay of LEDs to the light source drive signals output from the light source drive circuit and occurrence of rounding of response waveform can be prevented, and the image quality according to the output image data, in the image exposure apparatus can be also maintained well. Further, it is possible to remove adverse effects by disturbance, mutual interference or the like, which might cause by the increased number of wirings according to an increase of the number of LEDs.

In accordance with a second aspect of the present invention, the image exposure apparatus comprises: a light source section including a light source having a plurality of channels each of which comprises a plurality of LEDs, and a light source drive circuit for controlling a driving current to drive the LEDs for every channel.

According to the apparatus of the second aspect of the invention, because the driving current to drive the LEDs is controlled for every channel, it is possible to control the light amount of the LEDs for every channel irrespective of the number of LEDs which form a channel. Because a light source drive circuit for controlling a driving current to drive the LEDs, is not required for each of LEDs, it is possible to reduce the circuit scale for the light source drive circuit.

In accordance with a third aspect of the present invention, the image exposure apparatus comprises: a light source section including a light source having a plurality of channels each of which comprises a plurality of LEDs, a light amount measurement mechanism for measuring a total light amount of the LEDs for every channel, and a light source drive circuit for controlling a drive of the LEDs for every channel.

According to the apparatus of the third aspect of the invention, the total light amount of the LEDs which form each channel is measured by the light amount measurement mechanism and the driving current for the LEDs is controlled on the basis of the measured value for each channel. Accordingly, it is possible to reduce the time necessary for the measurement of the light amount. Further, because the image exposure apparatus requires storing only the total light amount value for LEDs which form each channel, it is possible to reduce the necessary memory capacity and further to reduce the time necessary to process the data because of reduction in data.

In accordance with a fourth aspect of the present invention, the image exposure apparatus comprises: a light source section including a light source having a plurality of channels which comprise a plurality of LEDs, and a light source drive circuit for controlling a driving current to drive the LEDs, wherein a length L between the light source and the light source drive circuit satisfies the following equation:

$$L \leqq (c/100f)/2$$

where c is a light velocity, and f is a pixel frequency (Hz) .

According to the apparatus of the fourth aspect of the invention, it is possible to obtain an appropriate wiring length which can maintain the image quality according to the output image data well and can perform a stable drive control for the light source.

In the first or fourth aspect of the invention, preferably, each of the channels comprises a plurality of LEDs, and the light source drive circuit controls a drive of the LEDs for every channel, and the apparatus further comprises a light amount measurement mechanism for measuring a total light amount of the LEDs for every channel.

According to the image exposure apparatus having such a construction, by reducing the length of wiring sufficiently between each of LEDs forming the light source and the light source drive circuit, the image quality according to the output image data can be also maintained well, and by measuring the total light amount value for LEDs which form each channel, the driving current of LEDs for every channel can be controlled on the basis of the measured value. Accordingly, it is possible to reduce the time necessary for the measurement of the light amount. Further, because the image exposure apparatus requires storing only the total light amount value for LEDs which form each channel, it is possible to reduce the necessary memory capacity, and further to reduce the time necessary to process the data because of reduction in data.

In the first or third aspect of the invention, preferably, the light source drive circuit controls a driving current to drive the LEDs.

According to the image exposure apparatus having such a construction, it is possible to control the driving current for LEDs stably by the ACC system.

BRIEF DESCRIPTION OF THE DRAWINGS

The present invention will become more fully understood from the detailed description given hereinbelow and the accompanying drawings which are given by way of illustration only, and thus are not intended as a definition of the limits of the present invention, and wherein;

FIG. 1 is a schematically perspective view of an image exposure apparatus according to the first embodiment of the present invention;
FIG. 2 is a view for explaining the distance between the LED and the light source drive circuit;
FIG. 3 is a view for explaining multiple exposures;
FIG. 4 is a view for explaining a drive and control system of a light source, using an ACC system, in the second embodiment of the present invention;
FIG. 5 is a schematically perspective view of an earlier development of image exposure apparatus; and
FIGS. 6A-6C show drive and control systems of a light source, wherein FIGS. 6A, 6B and 6C are explanation views of an automatic voltage control system, an APC system, and an ACC system, respectively.

PREFERRED EMBODIMENT OF THE INVENTION

Embodiments of the present invention will be explained with reference to the attached drawings, as follows.

First Embodiment:

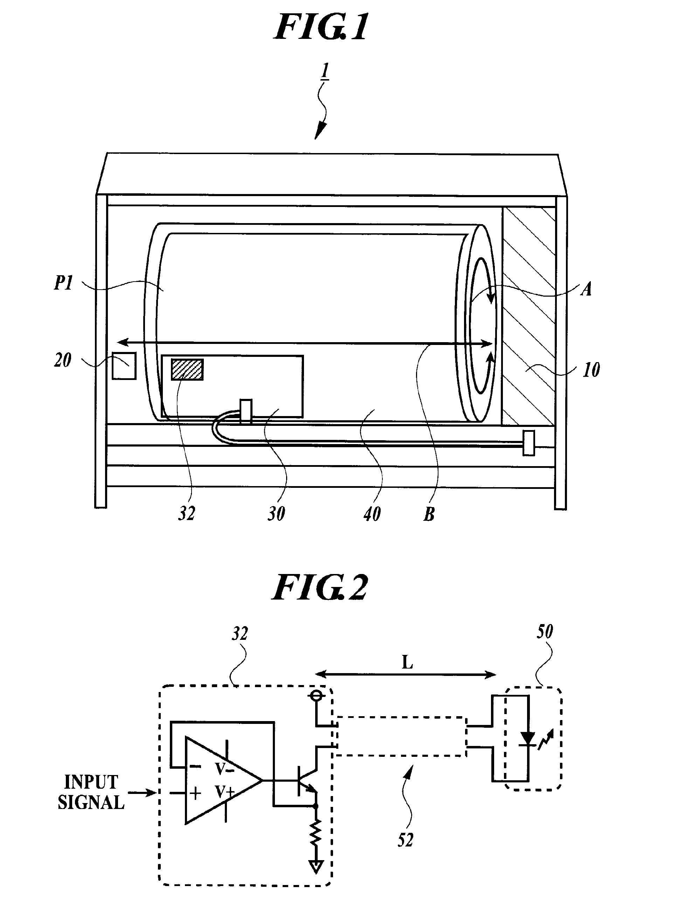

The first embodiment of the present invention will be explained. FIG. 1 is a schematically perspective view of an image exposure apparatus 1 according to the first embodiment. In FIG. 1, the image exposure apparatus 1 comprises an electrical equipment box 10, a light amount measurement mechanism 20, a light source section 30, a drum 40 and the like.

Elements, structures and functions thereof in the embodiments shown in GIG. 1, which are not explained particularly, are approximately the same as corresponding elements, structures and functions thereof, shown in FIG. 5.

The electrical equipment box 10 contains a power source, a transportation control device for a recording medium, an image processing device for creating output signals of light beam corresponding to an image data, a storage device, a control section for controlling the action of each functional section of the image exposure apparatus, and the like.

The light amount measurement mechanism 20 measures, for example, the light amount of light beam irradiated from the light source and outputs the measurement results to an exposure control section (not shown in figures), at a predetermined timing, e.g., prior to forming an image. The exposure control section is a functional section for performing FB control so that the light amount of light beam irradiated from the light source is equal to a desired value, in order to prevent deterioration of the image quality caused by fluctuation of light amount. The exposure control section determines the signal level to get the desired light amount value on the basis of the measured light amount value input from light amount measurement mechanism 20.

The light source section 30 comprises a light source, a mirror, a lens and the like and is provided to be movable in the sub-scanning direction "B" which is parallel to the rotary axis of the drum. Particularly, in the first embodiment of the invention, the light source section 30 is equipped with a light source drive circuit 32 for driving LEDs. At predetermined positions on the light source section 30, a plurality of channels are arranged in the sub-scanning direction "B" to realize an image formation in the image exposure apparatus 1 at a high speed. The light source section 30 changes light amount of the light beam generated by the LEDs according to the image data, with moving in the sub-scanning direction "B". Accordingly, an image is formed by irradiating the light beam with a changable light amount onto the recording medium P1 which is wound around a drum 40 rotating in the main scanning direction "A" through the mirror, the lens and the like.

FIG. 2 is a view for explaining the distance between the LED 50 and the light source drive circuit 32 for controlling a drive of LED 50. LED 50 and the light source drive circuit 32 are connected to each other through a wiring section 52, as shown in the figure. In this embodiment, the light source drive circuit 32 is installed on the light source section 30. As a result, it is possible to make the length of wiring section 52 which connects the LED 50 to the light source drive circuit 32, extremely small.

The length L of wiring which connects between the LED 50 and the light source drive circuit 32 can be calculated according to the following equation (1) without regard to the dielectric constant of wiring section 52:

$$L \leqq (c/100f)/2 \qquad (1)$$

where c is the light velocity, and f is the pixel frequency (Hz).

That is, the wiring length L between the LED 50 and the light source drive circuit 32 can be determined on the basis of the factor "10" to secure the rise speed of light amount, the factor "10" to maintain the stability of FB control, the light velocity "c" and the pixel frequency "f". In the right side of the equation (1), it is required to divide (c/100f) by 2 because the signal goes back and forth between the light source drive circuit 32 and the LED 50.

More concretely, in order to perform FB control, it is required for the wiring length L which connects between the LED 50 and the light source drive circuit 32, to be not more than c/10f because the delay of FB signal more than 1/10 of the pixel frequency "f" generates the so-called rounding by signal delay and does not enable securing the desired amount of light. There is a large possibility of the FB control circuit coming to be unstable when FB response speed is less than ten times thereof. The above-described particular value is known by a general rule of thumb.

For example, when the pixel frequency "f" is 1MHz, the following equation holds:

$$L \leqq \{300000000(m/sec) \div (100 \times 1000000(Hz)) \div 2,$$

that is, $L \leqq 1.5$.

Accordingly, the wiring length which connects between the LED and the light source drive circuit 32 is required to be not more than 1.5m.

That is, it is understood that not only increasing the pixel frequency but also reducing the wiring length are important for realizing an image formation at a high speed, as shown in the equation (1) clearly.

Because a stable FB control can be realized when the wiring length between the LED and the light source drive circuit 32 is made to be not more than the wiring length L calculated according to the equation (1), it enables not only accelerating of the imaging speed but also maintaining the quality of output image well.

According to the first embodiment of the invention, it is hard to cause the problem of the wiring length because the light source section 30 is equipped with the light source drive circuit 32. If the arrangement of the LED 50 and the light source drive circuit 32 can be set so that the wiring length between them satisfies the equation (1), the light source drive circuit 32 may, of course, be separated from the light source section 30.

As described above, according to the first embodiment of the invention, because the light source drive circuit 32 for driving LEDs is carried by the light source section 30, the wiring length which connects between the LED 50 and the light source drive circuit 32 can be reduced. Accordingly, it is possible to prevent response delay of the LED 50 to the light source driving signal output from the light source drive circuit 32, and to prevent lack of dots in an output image caused by the rounding of the response waveform or the like. Therefore, it is possible to maintain a good quality of output image in the image exposure apparatus 1, and further, to remove adverse effect of disturbance and mutual interference caused by the increased number of wirings according to an increase of the number of LEDs.

Second Embodiment:

Next, the second embodiment of the present invention will be explained.

The structure of the image exposure apparatus according to the second embodiment is like the image exposure apparatus 1 of the first embodiment, which is shown in FIG. 1, the same element as that of the first embodiment has the same number attached as that of the first embodiment and only portions differed from those in the first embodiment will be explained while omitting the repetitive explanation.

In the image exposure apparatus according to the second embodiment, drive of a plurality of LEDs is controlled every channel by using an ACC system when performing multiple exposure by using LEDs in which a channel comprises a plurality of LEDs.

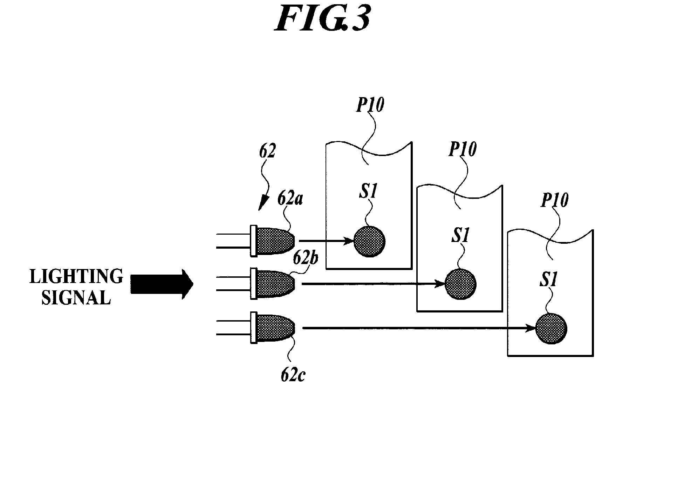

FIG. 3 is a view for explaining the multiple exposure. In FIG. 3, light emissions of LEDs 62a, 62b and 62c which form one channel 62 are performed in synchronization with carrying the recording medium P10 so that the light beams emitted from LEDs 62a, 62b and 62c are irradiated to the same point S1 on the recording medium P10 in turn. Accordingly, a desired total amount of light irradiated to the point S1 on the recording medium P10 can be secured. In order to secure the desired total amount of light irradiated to the point S1 on the recording medium P10, another manner in which light beams are simultaneously emitted from LEDs 62a, 62b and 62c which form one channel and are irradiated to the same point on the recording medium by using mirrors and the like, may be also adopted.

In the second embodiment of the present invention, the light source drive circuit 32 controls to drive LEDs according to the ACC system. Because the light source drive circuit 32 is installed in the light source section 30, the state of the light source drive circuit 32 can be kept stable, with occurring no vibration of the LED driving current value caused by a delay of FB signal or the like.

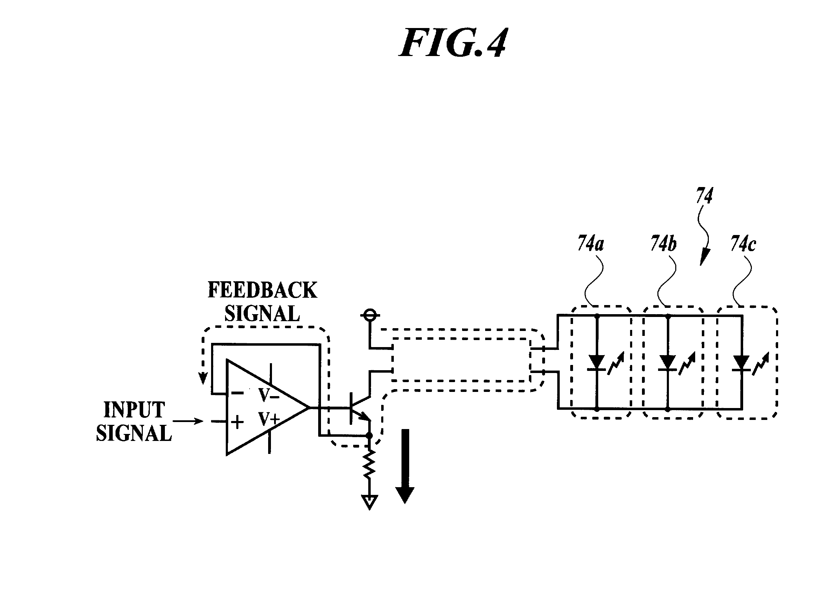

Next, the ACC system of the light source drive circuit 32 according to the second embodiment of the present invention will be explained with reference to FIG. 4.

In the figure, LEDs 74a, 74b and 74c are connected to one another in parallel to form one channel 74. The light source drive circuit 32 performs FB control about the sum value of the currents flowing through the three LEDs, that is, the light source drive circuit 32 performs a control of the whole channel 74 which comprises the three LEDs. Accordingly, although there is a possibility that each of the values of currents flowing through LEDs 74a, 74b and 74c becomes lack of uniformity, the sum value of the currents is controlled to be constant. As a result, it is possible to keep the image quality of a pixel to which multiple exposure is performed, constant.

Generally, when controlling to drive LEDs by the ACC system, a light source drive circuit is required for every LED, to control the light amount of each LED to be constant. However, when each of channels comprises a plurality of LEDs, the driving current to obtain a desired light amount may be determined for every channel, irrespective of the number of LEDs which form the channel. The LED drive control using a channel as a unit enables control of light amount with approximately the same stability as that of a case of LED drive control performed for every LED. Therefore, according to the embodiment, it is possible to reduce the circuit size of the whole light source drive circuit 32 because it is unnecessary to provide a light source drive circuit for controlling a driving current for driving each LED, for every LED.

Further, because the apparatus requires storing and maintaining only image data for every channel, the necessary amount of image data is 1/n times that of the case of driving each of LEDs (where n is the number of LEDs per a channel), it is possible to reduce the necessary memory capacity thereof and to increase the processing speed thereof.

Third Embodiment:

Next, the third embodiment of the present invention will be explained.

The structure of the image exposure apparatus according to the third embodiment is like the image exposure apparatus 1 of the first embodiment, which is shown in FIG. 1, the same element as that of the first embodiment has the same number attached as that of the first embodiment and only portions differed from those in the first embodiment will be explained while omitting the repetitive explanation.

In the third embodiment of the present invention, a channel comprises a plurality of LEDs, and the light amount measurement mechanism 20 performs measurement of light amount for every channel.

The light amount measurement mechanism 20, normally measures the light amount of light beam emitted from each of LEDs forming a light source. The light amount measurement mechanism 20 is for determining the signal level to give a desired light amount when performing exposure. On the other hand, when each of channels is constituted by a plurality of LEDs, the driving current for LEDs may be controlled on the basis of the total light amount of the LEDs forming the corresponding channel, irrespective of the number of LEDs forming the channel (refer to the second embodiment). Therefore, the light amount measurement mechanism 20 is required to measure only the total light amount of LEDs which form the corresponding channel, however, is not required to measure the light amount of each LED.

In the third embodiment of the present invention, when performing a light amount measurement by the light amount measurement mechanism 20, all of LEDs which form a corresponding channel are lightened and the light amount of the all of LEDs is measured by the light amount measurement mechanism 20, for every channel. Thereafter, on the basis of the light amount measured by the light amount measurement mechanism 20, the signal level (value of driving current) to each channel is amended and determined.

According to the embodiment, time necessary for the light amount measurement by the light amount measurement mechanism 20 can be reduced. Further, because to keep only the total light amount (measured value) of LEDs which form each corresponding channel is required in the image exposure apparatus 1, it is possible to reduce the necessary data amount and the necessary memory capacity thereof and also to reduce the time necessary for data processing.

Although in the above description, the first to third embodiments are explained individually, the image exposure apparatus according to the present invention may apply a combination of all the first to third embodiments or a combination of two thereof. For example, the present invention includes an image exposure apparatus in which each channel comprises a plurality of LEDs, and the light source drive circuit is arranged at a predetermined position at which the length L between each LED and the light source drive circuit satisfies the equation (1), e.g., the light source drive circuit is installed in the light source section, and the drive of the light source by the light source drive circuit is controlled by the ACC system, and the light amount measurement mechanism measures a light amount of LEDs for every channel; and the like.

According to the present invention, because the light source drive circuit is installed in the light source section, it is possible to reduce the length of wiring for connecting the LEDs to the light source drive circuit. As a result, the response delay of LEDs to the light source drive signals output from the light source drive circuit and occurrence of rounding of response waveform can be prevented, and the image quality according to the output image data, in the image exposure apparatus can be also maintained well. Further, it is possible to remove adverse effects by disturbance, mutual interference or the like, which might cause by the increased number of wirings according to an increase of the number of LEDs.

Further, by controlling the driving current to drive the LEDs for every channel, it is possible to control the light amount of LEDs for every channel irrespective of the number of LEDs which form a channel. Accordingly, because a light source drive circuit for controlling a driving current to drive the LEDs, is not required for each of LEDs, it is possible to reduce the circuit scale for the light source drive circuit.

By measuring the total light amount of the LEDs which form each channel by the light amount measurement mechanism and by controlling the driving current for LEDs on the basis of the measured value for each channel, it is possible to reduce the time necessary for the measurement of the light amount. In the case, because the image exposure apparatus requires storing only the total light amount value for LEDs which form each channel, it is possible to reduce the necessary memory capacity and further to reduce the time necessary to process the data because of reduction in data.

Further, by setting the length L between the light source and the light source drive circuit to satisfy the equation (1), it is possible to obtain an appropriate wiring length which can maintain the image quality according to the output image data well and can perform a stable drive control for the light source.

According to the image exposure apparatus having such a construction, by reducing the length of wiring sufficiently between each of LEDs forming the light source and the light source drive circuit, the image quality according to the output image data can be also maintained well, and by measuring the total light amount value for LEDs which form each channel, the driving current of LEDs for every channel can be controlled on the basis of the measured value. Accordingly, it is possible to reduce the time necessary for the measurement of the light amount. Further, because the image exposure apparatus requires storing only the total light amount value for LEDs which form each channel, it is possible to reduce the necessary memory capacity, and further to reduce the time necessary to process the data because of reduction in data.

The entire disclosure of Japanese Patent Application Nos. Tokugan 2002-180330 which was filed on June 20, 2002, including specification, claims, drawings and summary are incorporated herein by reference in its entirety.

**Claims**

1. An image exposure apparatus comprising:

   a light source section including a light source having a plurality of channels which comprise a plurality of LEDs,
   a light source drive circuit for driving the LEDs, and
   a scanning section for scanning the light source section when performing image exposure,

   wherein the light source drive circuit is installed in the light source section.

2. An image exposure apparatus comprising:

   a light source section including a light source having a plurality of channels each of which comprises a plurality of LEDs, and
   a light source drive circuit for controlling a driving current to drive the LEDs for every channel.

3. An image exposure apparatus comprising:

   a light source section including a light source having a plurality of channels each of which comprises a plurality of LEDs,
   a light amount measurement mechanism for measuring a total light amount of the LEDs for every channel, and
   a light source drive circuit for controlling a drive of the LEDs for every channel.

4. An image exposure apparatus comprising:

   a light source section including a light source having a plurality of channels which comprise a plurality of LEDs, and
   a light source drive circuit for controlling a driving current to drive the LEDs,

   wherein a length L between the light source and the light source drive circuit satisfies the following equation:

   $$L \leqq (c/100f)\ /2$$

   where c is a light velocity, and f is a pixel frequency (Hz).

5. The apparatus of any one of claims 1 and 4, wherein each of the channels comprises a plurality of LEDs, and the light source drive circuit controls a drive of the LEDs for every channel, and the apparatus further comprises a light amount measurement mechanism for measuring a total light amount of the LEDs for every channel.

6. The apparatus of any one of claims 1, 3 and 5, wherein the light source drive circuit controls a driving current to drive the LEDs.

# FIG.1

*1*

*P1*

*A*

*20*

*10*

*32* *30* *40* *B*

# FIG.2

*32* *50*

L

INPUT
SIGNAL

V−
V+

*52*

# FIG.3

LIGHTING
SIGNAL

62

62a

62b

62c

P10

P10

P10

S1

S1

S1

# FIG.4

EP 1 389 532 A2

# FIG.5

EP 1 389 532 A2

# FIG. 6A

INPUT
SIGNAL →

*150*

# FIG. 6B

FEEDBACK SIGNAL

INPUT
SIGNAL →

*152*   *154*

# FIG. 6C

FEEDBACK
SIGNAL

INPUT
SIGNAL →

*156*